# EUROPÄISCHE PATENTANMELDUNG

(11) **EP 4 711 115 A1**
(43) Veröffentlichungstag der Anmeldung: **18.03.2026**
(21) Anmeldenummer: 25216683.0
(22) Anmeldetag: 09.05.2023
(51) Int. Cl.: B29C 45/28

(54) **HUBELEMENT ZUR BETÄTIGUNG VON VERSCHLUSSNADELN UND BETÄTIGUNGSVORRICHTUNG MIT EINEM HUBELEMENT**

(30) Priorität: 13.05.2022 DE 102022112128
(62) Teilanmeldung aus: 23172454.3
(71) Anmelder: Günther Heisskanaltechnik GmbH, 35066 Frankenberg (DE)
(72) Erfinder: Sommer, Siegrid, 35099 Burgwald (DE); Sommer, Dr. Stefan, 35099 Burgwald (DE); Schnell, Torsten, 35104 Lichtenfels (DE)
(74) Vertreter: Patentanwälte Olbricht Buchhold Keulertz

(57) **Zusammenfassung**

Die Erfindung betrifft ein Hubelement zur Betätigung von Verschlussnadeln in Spritzgießwerkzeugen mit Nadelverschlussdüsen, wobei das Hubelement (10) einen Grundkörper (13) und einen Stutzen (11) umfasst, wobei eine einzelne Verschlussnadel (20) in den Stutzen (11) und in den Grundkörper (13) des Hubelements (10) einsetzbar ist, und wobei der Grundkörper (13) wenigstens zwei erste gegenüberliegende Seitenflächen (S1, S2) aufweist. Erfindungsgemäß ist vorgesehen, dass an den ersten gegenüberliegenden Seitenflächen (S1, S2) des Grundkörpers (13) jeweils eine erste Ausnehmung (14) ausgebildet ist.

## Beschreibung

Die Erfindung betrifft ein Hubelement zur Betätigung von Verschlussnadeln in Spritzgießwerkzeugen mit Nadelverschlussdüsen gemäß dem Oberbegriff von Anspruch 1 und eine Betätigungsvorrichtung mit einem Hubelement nach Anspruch 14.

Nadelverschlussdüsen werden in Spritzgießwerkzeugen eingesetzt, um eine fließfähige Masse bei einer vorgebbaren Temperatur unter hohem Druck einem trennbaren Formeinsatz zuzuführen. Sie haben meist pneumatisch, hydraulisch oder elektrisch angetriebene Verschlussnadeln, die die Angussöffnungen im Formeinsatz zyklisch öffnen und verschließen. Jede Verschlussnadel ist hierzu im werkzeugseitigen Bereich der Spritzgießvorrichtung axialverschieblich gelagert und im düsenseitigen Bereich mittig durch einen Strömungskanal oder parallel zum Strömungskanal für die zu verarbeitende Masse hindurchgeführt. Der Strömungskanal endet in einem Düsenendstück, das eine Düsenaustrittsöffnung bildet. In Schließstellung greift das untere Ende der Verschlussnadel in einen Dichtsitz ein, der im Düsenendstück oder im Formeinsatz ausgebildet ist.

Für zahlreiche Anwendungen ist es notwendig, alle Verschlussnadeln synchron zu bewegen und mit gleicher Schließkraft zu beaufschlagen, insbesondere dann, wenn in einem Werkzeug mehrere Formeinsätze gleichzeitig angespritzt werden. Dennoch kann anwendungsbedingt eine unabhängige separate Ansteuerung der Verschlussnadeln mit unterschiedlichen Schließkräften und individuellen Bewegungsprofilen notwendig sein. Ferner herrscht bei zahlreichen Anwendungen enormer Platzmangel, so dass vor allen die gesamte Baugröße des Spritzgießwerkzeugs immer mehr an Bedeutung gewinnt.

Bei einem aus DE 196 11 880 A1 bekannten Spritzgießwerkzeug mit mehreren Nadelverschlussdüsen ist jede Verschlussnadel an einem separaten Nadelträgerelement befestigt. Letztere sind an zwei gegenüberliegenden Flachseiten mit schräg liegenden Führungsnocken versehen, die in schräg verlaufende Nuten eines gabelförmigen Schieberahmens eingreifen. Unterhalb der Flachseiten ist an jedem Nadelträgerelement ein zylindrischer Abschnitt ausgebildet, der in der Art eines Hubkolbens in einer Führungsbuchse axialverschieblich gelagert ist. Bewegt man den Schieberahmen hin und her, werden die einzelnen Nadelträgerelemente senkrecht dazu auf und ab bewegt.

Problematisch hierbei ist vor allem, dass konstruktionsbedingt und aus mechanischen Aspekten ein relativ großes Bauvolumen vorgegeben wird, sodass man relativ hoch aufbauen muss. Die Schieberahmen verbinden die einzelnen Nadelträgerelemente über Führungsleisten und Schieberteile die sich nahezu über die gesamte Größe des Spritzgießwerkzeugs erstrecken. Um eine große Anzahl an Verschlussnadeln verbauen und möglichst viele Anwendungsfälle abdecken zu können, muss die komplette Werkzeuggröße genutzt und die Werkzeugkomponenten mit entsprechend hohen Festigkeitswerten ausgelegt werden. Zudem kann eine schieberahmenunabhängige Steuerung einzelner Nadelträgerelemente prinzipbedingt nicht umgesetzt und/oder einzelne Verschlussnadeln separat abgeschaltet werden. Weiterhin nachteilhaft ist, dass bedingt durch Maßtoleranzen ein exakt gleichzeitiges Eintreten der Verschlussnadeln in den jeweils zugeordneten Dichtsitz nicht zu gewährleisten ist. Aus diesem Grund ist jede Verschlussnadel in DE 196 11 880 A1 über ein Zwischenelement an ihrem Nadelträgerelement befestigt, was sowohl den Montageaufwand als auch die Herstellkosten erhöht. Hohe Reibungskräfte zwischen den Führungsnocken und dem Schieberahmen sind auch hier von Nachteil.

Ziel der Erfindung ist, diese und weitere Nachteile des Standes der Technik zu überwinden und ein verbessertes Hubelement zur Betätigung von Verschlussnadeln in Spritzgießwerkzeugen mit Nadelverschlussdüsen bereitzustellen, das besonders kompakt, mit einfachen Mitteln sowie kostengünstig aufgebaut ist und eine voneinander unabhängige Ansteuerung der einzelnen Verschlussnadeln mit unterschiedlich großen Schließkräften und Schließzeiten ermöglicht. Das Hubelement soll insbesondere ohne großen Platzbedarf und je nach Bedarf in Kombination mit weiteren Elementen für Mehrkavitäten-Werkzeuge oder einzeln eingesetzt werden können. Ferner sollen das Hubelement und weitere für die Anwendung benötigte Bauteilkomponenten kostengünstig und in Serie gefertigt werden können.

Hauptmerkmale der Erfindung sind im kennzeichnenden Teil von Anspruch 1 angegeben. Ausgestaltungen sind Gegenstand der Ansprüche 2 bis 15.

Bei einem Hubelement zur Betätigung einer Verschlussnadel in einem Spritzgießwerkzeug mit Nadelverschlussdüsen, wobei das Hubelement einen Grundkörper umfasst, wobei eine Verschlussnadel in den Grundkörper des Hubelements einsetzbar ist, wobei der Grundkörper wenigstens zwei erste gegenüberliegende Seitenflächen aufweist, sieht die Erfindung vor, dass an den ersten gegenüberliegenden Seitenflächen des Grundkörpers jeweils eine erste Ausnehmung ausgebildet ist.

Durch die Festlegung bzw. durch das Einsetzen einer einzelnen Verschlussnadel in den Grundkörper des Hubelements ist sichergestellt, dass einzelne Verschlussnadeln unabhängig voneinander angesteuert und beispielsweise bei einem Düsendefekt oder bei einem Ausfall der Heizung oder bei anderen unerwünschten Betriebszuständen, separat abgeschaltet werden können. Im direkten Vergleich zur bekannten "Plattenbauweise" kann der erfindungsgemäße Grundkörper des Hubelements kompakter ausgelegt werden, was die gesamte Aufbaugröße und insbesondere die Bauhöhe des Spritzgießwerkzeugs erheblich reduziert. Zudem entsteht eine Art Baukastensystem, das eine Anpassung der Anzahl der Hubelemente und Verschlussnadeln sowie verschiedene Anordnungsmöglichkeiten der Hubelemente zulässt. Beispielsweise können sich mehrere Hubelemente in engeren Einbauräumen gegenseitig abstützen. Die ersten Ausnehmungen an den Seitenflächen bieten vorteilhafterweise einen Aufnahmeraum für weitere seitliche Anbauteile.

Nach einer bevorzugten Ausführungsform sind die ersten Ausnehmungen der ersten Seitenflächen Fixieröffnungen. Diese dienen zur seitlichen Aufnahme von weiteren Anbauteilen, die zur Führung der Hubelemente eingesetzt und fixiert werden können. Ferner weisen die ersten Seitenflächen vorzugsweise einen Mittelpunkt auf, wobei die ersten Ausnehmungen der Seitenflächen konzentrisch zum Mittelpunkt ausgebildet sind. Dabei weisen die ersten Ausnehmungen der ersten Seitenflächen vorzugsweise jeweils ein Innengewinde auf. Letzteres bildet die Ausnehmung zu einem Schraubloch aus und dient zur sicheren Fixierung von weiteren seitlichen Anbauteilen wie zum Beispiel Führungselemente oder Stifte. Die Konzentrizität gibt bei der Aufnahme weiterer seitlicher Anbauteile ein mechanisches Gleichgewicht vor, weil der Schwerpunkt des Hubelements durch die symmetrische Anordnung der ersten Ausnehmungen nicht verlagert wird.

Eine wichtige Ausführungsform der Erfindung sieht vor, dass der Grundkörper des Hubelements im Wesentlichen quaderförmig ausgebildet ist, wobei der Grundkörper zumindest teilweise aus einem selbstschmierenden und/oder einem diamantartigen Werkstoff gefertigt oder zumindest teilweise mit einem selbstschmierenden oder einem diamantartigen Werkstoff beschichtet ist, so dass die Reibungskräfte und der damit einhergehende mechanische Verschleiß deutlich reduziert wird. Das Hubelement ist durch die Quaderform besonders kompakt und symmetrisch ausgebildet, wodurch das Hubelement vielfältig bei unterschiedlichen Anwendungen Einsatz finden kann. Zudem wird durch den relativ einfachen konstruktiven Aufbau, eine kostengünstige Serienfertigung unterstützt.

Vorzugsweise sind die ersten Seitenflächen jeweils mit Nuten versehen, wobei die Nuten insbesondere abgesetzt und X-förmig ausgebildet sind. Die Nuten verkleinern vorteilhafterweise die Kontaktflächen der Seitenflächen wodurch die Führung und Abdichtung des Hubelements in Relation zu angrenzenden Bauteilen verbessert wird, dabei dienen die Nuten gleichzeitig als Schmierstoffdepot und reduzieren die Reibkräfte. Alternativ können die Nuten auch eine andere Form aufweisen. Die X-Nuten erweisen sich aufgrund der Quaderform des Hubelements besonders vorteilhaft, weil die X-Form einfach über zwei symmetrische Diagonalen an den ersten Seitenflächen erzeugt werden kann.

**In** einer bevorzugten Variante weist der Grundkörper einen Stutzen auf, wobei der Grundkörper und der Stutzen eine Durchgangsöffnung zur Aufnahme der Verschlussnadel entlang einer ersten Richtung umfassen. Vorzugsweise ist der Stutzen des Hubelements im Wesentlichen zylindrisch ausgebildet, wobei der Stutzen mit einem Gewinde versehen ist, und wobei der Stutzen im Wesentlichen senkrecht zu dem Grundkörper angeordnet ist. Die Verschlussnadel wird dadurch im oberen Endabschnitt geschützt und kann entlang der ersten Richtung sicher geführt werden. Der Stutzen kann vorteilhafterweise ein gegenläufiges Element mit Gewinde zur Fixierung der Verschlussnadel aufnehmen. Bei Bedarf können Grundkörper und Verschlussnadel durch Lösen des gegenläufigen Elements ausgewechselt werden.

Nach einer weiteren Ausführungsform ist die Verschlussnadel im eingesetzten Zustand mit dem Hubelement fixierbar, wobei die Verschlussnadel einen oberen Endabschnitt und einen unteren Endabschnitt aufweist. Dadurch kann die Verschlussnadel über die Ansteuerung des Hubelements bewegt werden. Vorzugsweise weist der untere Endabschnitt der Verschlussnadel dabei eine Nadelspitze zum Verschließen eines Formeinsatzes auf. Je nach Bedarf, kann durch eine Hubbewegung der Verschlussnadel, die Strömungsverbindung zwischen Spritzgießwerkzeug und Formeinsatz hergestellt werden, um die fließfähige Masse dem Formeinsatz zuzuführen. Um die Verschlussnadel individuell an das Werkzeug anpassen und gleichzeitig eine Höhenverstellbarkeit gewährleisten zu können, ist die Verschlussnadel entlang der ersten Richtung relativ zu dem Hubelement justierbar ausgebildet. Um darüber hinaus eine stets synchrone Stellbewegung bei gleichzeitigem Bewegungsausgleich gewährleisten zu können, ist die Verschlussnadel gemäß einer weiteren Ausführungsform axialfest und radial schwimmend an dem Hubelement festlegbar.

Vorzugsweise ist der obere Endabschnitt der Verschlussnadel flach ausgebildet, wobei ein Nadelkopf im Bereich des oberen Endabschnitts der Verschlussnadel angeordnet ist, so dass der obere Endabschnitt der Verschlussnadel vorteilhafterweise eine Anschlagsfläche bildet und nicht über die Höhe des Spritzgießwerkzeugs hinausragt. Dabei ist der Nadelkopf bevorzugterweise ringförmig ausgebildet, wobei die Verschlussnadel an ihrem oberen Endabschnitt durch den Nadelkopf hindurchgeführt ist. Über den Nadelkopf wird ein Zwischenelement geschaffen, worüber eine schwimmende Lagerung der Verschlussnadel mit dem Hubelement erzeugt werden kann. Die Ringform bietet sich insbesondere aufgrund der zylindrischen Form des Stutzens und der Verschlussnadel an. Alternativ kann auch eine verstellbare Verschlussnadel vorgesehen sein, die kein Nadelkopf im oberen Endabschnitt benötigt.

Um eine geeignete Vorpositionierungsmöglichkeit für die Verschlussnadel zu schaffen und einer unerwünschten Durchrutschgefahr entgegenzuwirken, sodass die Verschlussnadel ohne hindurchzufallen von oben in das Hubelement eingesetzt werden kann, weist der ringförmige Nadelkopf vorzugsweise Anschlagsflächen auf, wobei eine erste Anschlagsfläche dem unteren Endabschnitt der Verschlussnadel zugewandt ist, und wobei eine zweite Anschlagsfläche dem oberen Endabschnitt der Verschlussnadel zugewandt ist. Dabei ist bevorzugterweise vorgesehen, dass der Stutzen einen zu der ersten Anschlagsfläche des Nadelkopfs korrespondierenden Anschlag aufweist, wobei die dem unteren Endabschnitt zugewandte erste Anschlagsfläche des Nadelkopfs im eingesetzten Zustand der Verschlussnadel an dem Anschlag des Stutzens anliegt.

**In** einer weiteren bevorzugten Variante ist ein Befestigungselement zur Fixierung der Verschlussnadel mit dem Hubelement vorgesehen, wobei das Befestigungselement im Wesentlichen hohlzylindrisch ausgebildet ist. Dabei weist das Befestigungselement ein Innengewinde auf, das zu dem Gewinde des Stutzens korrespondierend ausgebildet ist, wobei das Befestigungselement im eingesetzten Zustand der Verschlussnadel auf den Stutzen des Hubelements aufsetzbar und mit diesen fixierbar ist. Dadurch kann das Befestigungselement einfach auf den zylindrischen Stutzen gesetzt und mit diesen fixiert werden und gleichzeitig sowohl den Stutzen, als auch die Verschlussnadel aufnehmen.

Um einen geeigneten Endanschlag zu schaffen und die Verschlussnadel bzw. den Nadelkopf beidseitig entlang der ersten Richtung räumlich begrenzen und sichern zu können, weist das Befestigungselement einen zu der zweiten Anschlagsfläche des Nadelkopfs korrespondierenden Anschlag auf, wobei die dem oberen Endabschnitt zugewandte zweite Anschlagsfläche im aufgesetzten und fixierten Zustand des Befestigungselements an dem Anschlag des Befestigungselements anliegt. Bevorzugterweise stellt der Nadelkopf im eingesetzten Zustand der Verschlussnadel und im aufgesetzten und fixierten Zustand des Befestigungselements, eine schwimmende Lagerung bereit.

Dabei ist weiter bevorzugt, dass das Befestigungselement an seiner Oberseite eine Kantengeometrie, insbesondere eine Sechskantgeometrie aufweist, wobei das Befestigungselement an seiner Unterseite eine Anlaufschräge zur Aufnahme des Stutzens aufweist, und wobei der Stutzen eine zu der Anlaufschräge des Befestigungselements korrespondierende Einführschräge aufweist. Dadurch wird das Aufsetzen des Befestigungselements auf den Stutzen bzw. das Einführen des Stutzens vereinfacht. Die ersten Gewindegänge am Stutzen und am Befestigungselement können dadurch beim Aufsetzen deutlich vereinfacht ineinandergreifen, ohne das Befestigungselement zu verkanten. Das Befestigungselement kann an seiner Oberseite im Bereich der Kantengeometrie über ein geeignetes Werkzeug montiert bzw. demontiert werden.

Eine weitere wichtige Variante der Erfindung sieht zwei Führungselemente vor, wobei die Führungselemente zur Führung des Hubelements in den ersten Ausnehmungen der ersten Seitenflächen des Grundkörpers fixierbar sind. Vorzugsweise sind die Führungselemente im Wesentlichen zylindrisch ausgebildet, wobei die Führungselemente dem Grundkörper zugewandte Vorsprünge aufweisen. Dabei ist besonders bevorzugt, dass die Vorsprünge der Führungselemente in die ersten Ausnehmungen der ersten Seitenflächen des Grundkörpers einsetzbar sind, wobei die Vorsprünge einen Gewindebereich aufweisen. Über die Vorsprünge können die Führungselemente einfach in die ersten Ausnehmungen an den ersten Seitenflächen des Grundkörpers eingeführt und durch das Gewinde fixiert werden. Ferner weisen die Vorsprünge benachbart zu den Gewindebereichen einen Passdurchmesser auf, worüber die Führungselemente exakt vorpositioniert werden können.

Wie bereits eingangs beschrieben, bieten die ersten Ausnehmungen an den Seitenflächen vorteilhafterweise einen Aufnahmeraum für weitere Anbauteile wie zum Beispiel für die Führungselemente. Die zylindrische Ausbildung der Führungselemente bzw. der Vorsprünge erleichtert das Zusammenfügen und fixieren, weil die Vorsprünge im Wesentlichen formschlüssig in die ersten Ausnehmungen eingesetzt bzw. eingeschraubt werden können. Die Ausnehmungen an den Seitenflächen können auch als Schmierstoffdepot verwendet werden.

Nach einer bevorzugten Ausführungsform weisen die Führungselemente Aufnahmebereiche auf, wobei die Aufnahmebereiche der Führungselemente einen größeren Durchmesser als die Vorsprünge der Führungselemente aufweisen. Durch den größeren Durchmesser der Aufnahmebereiche entsteht vorteilhafterweise eine Anschlagsfläche gegenüber den ersten Seitenflächen des Grundkörpers. Im Betrieb bewegen sich die Führungselemente relativ zu anderen seitlichen Werkzeugteilen. Um die Reibungskräfte und den Reibverschleiß an den Führungselementen weitestgehend zu reduzieren und gleichzeitig eine nahezu widerstandsfreie Relativbewegung zuzulassen, sind in den Aufnahmebereichen der Führungselemente drehbare Laufflächen angeordnet, wobei die Führungselemente eine Edelstahllegierung aufweisen. Die Edelstahllegierung erweist sich aufgrund der relativ hohen Temperaturbeständigkeit als besonders vorteilhaft, weil in Spritzgießwerkzeugen regelmäßig Ausgasungen oder anderen unerwünschten Betriebszustände eintreten können. Zudem ist der Werkstoff sehr korrosionsbeständig, langlebig und insbesondere wartungsarm.

Die Führungselemente sind aufgrund der drehbaren Laufflächen als Laufrollen ausgebildet und insbesondere als Verschleißteile ausgelegt, die relativ einfach und kostengünstig ausgewechselt werden können. Es können aber auch Keramikstifte oder andere geeignete Führungs- bzw. Gleitkörper eingesetzt werden. Aufgrund der Laufrollen werden die Anlageflächen und Reibungskräfte signifikant reduziert. Ferner wird die Flächenpressung durch die Laufrollen reduziert, weil sich die Pressung nicht auf eine Fläche konzentriert, sondern der Führungsbewegung der Laufrolle folgt. Dadurch, dass die Flächenpressung und die Reibungskräfte reduziert werden kann die Antriebseinheit bzw. Antriebsquelle der Verschlussnadel kleiner dimensioniert werden und es können dadurch weiter Kosten in der Fertigung reduziert werden.

Nach einer bevorzugten alternativen Ausführungsform sind die ersten Ausnehmungen der ersten Seitenflächen Führungsnuten zur Führung der drehbaren Laufflächen der Führungselemente, wobei die Führungsnuten insbesondere kurvenförmig ausgebildet sind. In dieser alternativen Variante sind die Führungselemente umgekehrt angeordnet und werden über ihre Vorsprünge nicht an dem Hubelement, sondern an seitlichen Werkzeugkomponenten wie zum Beispiel Steuerschienen fixiert. Dabei werden die Führungselemente beim Schließen und/oder Öffnen der Formkavität über ihre drehbaren Laufflächen in den Führungsnuten des Hubelements roll- und/oder zwangsgeführt. Aufgrund der Kurvengeometrie der Führungsnuten, worin die drehbaren Laufflächen der Führungselemente eingesetzt und geführt sind, wird ein besonders sanftes Schließverhalten der Verschlussnadel eingestellt. Dadurch stellt sich ein optimales Kraft- und Wegverhältnis zum Schließen der Verschlussnadel ein. Diese Maßnahme bietet sich insbesondere bei pneumatischen oder hydraulischen Systemen an, wo keine zusätzliche Regelungseinheit zur Verfügung steht um über den Hubweg ein Bewegungs- bzw. Fahrprofil einzustellen.

Dabei ist die kurvenförmige Führungsnut insbesondere derart ausgebildet, dass das Führungselement kurz vor Erreichen eines Schließpunktes der Verschlussnadel bzw. vor einem unteren Endanschlag der Führungsnut, entlang der ersten Richtung verzögert wird. Den unteren Endanschlag kann man aus konstruktiver Sicht quasi als unteren "Totpunkt" der Führungselemente bzw. Führungsnut betrachten. Die Verzögerung wird insbesondere durch einen nahezu ebenen Verlauf der Führungsnut im Bereich des unteren Endanschlags hervorgerufen. Die Führungselemente bzw. die drehbaren Laufflächen werden beim Schließen der Verschlussnadel bzw. beim Schließvorgang von einer geneigten Ebene in eine weniger bis gar nicht geneigte Ebene überführt. Dabei ist der Bereich des unteren Endanschlags der Führungsnut insbesondere zylindrisch und korrespondierend zu den drehbaren Laufflächen der Führungselemente ausgebildet. Diese konstruktive Maßnahme unterstützt ein sanftes Schließverhalten der Verschlussnadel zusätzlich.

**In** einer weiteren besonders bevorzugten Variante weist der Grundkörper des Hubelements zwei weitere gegenüberliegende Seitenflächen auf, wobei die weiteren gegenüberliegenden Seitenflächen im Wesentlichen senkrecht zu den ersten gegenüberliegenden Seitenflächen angeordnet sind. Dabei sind an den weiteren gegenüberliegenden Seitenflächen des Grundkörpers jeweils zwei weitere Ausnehmungen zur gleichzeitigen Aufnahme von je zwei Führungselementen ausgebildet. Dabei sind die weiteren Ausnehmungen der weiteren Seitenflächen vorzugsweise Fixieröffnungen. Diese dienen zur seitlichen Aufnahme von weiteren Anbauteilen, die zur Führung der Hubelemente eingesetzt und fixiert werden können. Dadurch ergibt sich der Vorteil, dass je nach Bedarf und Anwendungsfall insgesamt vier Führungselemente eingesetzt werden können. Beispielsweise sind bei einer reinen Silikonverarbeitung relativ geringe Nadelschließkräfte erforderlich, so dass zweckmäßig insgesamt zwei Führungselemente eingesetzt werden. Bei langen Nachdruckzeiten hingegen sind hohe Nadelschließkräfte erforderlich und es kommen insgesamt vier Führungselemente, also zwei Führungselemente pro Seitenfläche, zum Einsatz. Aufgrund dieser bevorzugten Ausführungsform können durch die Erfindung deutlich mehr Anwendungsfälle abgedeckt werden.

Vorzugsweise sind die weiteren Seitenflächen mit Nuten versehen, wobei die weiteren Ausnehmungen der weiteren Seitenflächen jeweils ein Innengewinde aufweisen. Das Innengewinde dient zur sicheren Aufnahme und Fixierung der Führungselemente. Die Nuten verkleinern vorteilhafterweise die Kontaktflächen der weiteren Seitenflächen, wodurch die Führung und Abdichtung des Hubelements in Relation zu angrenzenden Bauteilen verbessert wird. Dabei dienen die Nuten gleichzeitig als Schmierstoffdepot und reduzieren die Reibkräfte. Die Nuten in den weiteren Seitenflächen sind insbesondere X-förmig ausgebildet. Alternativ können die Nuten auch eine andere Form aufweisen. Die X-Nuten erweisen sich aufgrund der Quaderform des Hubelements als besonders vorteilhaft, weil die X-Form einfach über zwei symmetrische Diagonalen an den weiteren Seitenflächen erzeugt werden kann.

Nach einer weiteren Ausführungsform weisen die weiteren Seitenflächen einen Mittelpunkt auf, wobei die weiteren Ausnehmungen der weiteren Seitenflächen exzentrisch zum Mittelpunkt ausgebildet sind. Vorzugsweise ist der Abstand zwischen den Mittelpunkten der weiteren Seitenflächen und den zwei weiteren Ausnehmungen auf jeder der weiteren Seitenflächen im Wesentlichen gleich groß, wobei die weiteren Ausnehmungen der weiteren Seitenflächen jeweils in den vorgesehenen Nuten angeordnet sind. Dadurch entsteht ein symmetrischer Aufbau, so dass bei eingesetzten Führungselementen ein mechanisches Gleichgewicht eingestellt wird. Zudem wird dadurch eine gleichmäßige Führung der Hubelemente gewährleistet, weil der Schwerpunkt des Hubelements durch den symmetrischen Aufbau nicht verlagert wird. Aufgrund der Exzentrizität liegt ein Höhenversatz zwischen den ersten Ausnehmungen an den ersten Seitenflächen und den weiteren Ausnehmungen an den weiteren Seitenflächen vor.

Nach einer bevorzugten alternativen Ausführungsform sind die weiteren Ausnehmungen der weiteren Seitenflächen Führungsnuten zur Führung der drehbaren Laufflächen der Führungselemente, wobei die Führungsnuten insbesondere kurvenförmig ausgebildet sind. In dieser alternativen Variante sind die Führungselemente umgekehrt angeordnet und werden über ihre Vorsprünge nicht an dem Hubelement, sondern an seitlichen Werkzeugkomponenten wie zum Beispiel Steuerschienen fixiert. Dabei werden die Führungselemente beim Schließen und/oder Öffnen der Formkavität über ihre drehbaren Laufflächen in den Führungsnuten des Hubelements roll- und/oder zwangsgeführt. Aufgrund der Kurvengeometrie der Führungsnuten, worin die drehbaren Laufflächen der Führungselemente eingesetzt und geführt sind, wird ein besonders sanftes Schließverhalten der Verschlussnadel eingestellt. Dabei ist die kurvenförmige Führungsnut insbesondere derart ausgebildet, dass das Führungselement kurz vor Erreichen eines Schließpunktes der Verschlussnadel bzw. vor einem unteren Endanschlag der Führungsnut, entlang der ersten Richtung verzögert wird. Den unteren Endanschlag kann man aus konstruktiver Sicht quasi als unteren "Totpunkt" der Führungselemente bzw. Führungsnut betrachten. Die Verzögerung wird insbesondere durch einen nahezu ebenen Verlauf der Führungsnut im Bereich des unteren Endanschlags hervorgerufen. Die Führungselemente bzw. die drehbaren Laufflächen werden beim Schließen der Verschlussnadel bzw. beim Schließvorgang von einer geneigten Ebene in eine weniger bis gar nicht geneigte Ebene überführt. Dabei ist der Bereich des unteren Endanschlags der Führungsnut insbesondere zylindrisch und korrespondierend zu den drehbaren Laufflächen der Führungselemente ausgebildet. Diese konstruktive Maßnahme unterstützt ein sanftes Schließverhalten der Verschlussnadel zusätzlich und das Kraftwegeverhältnis sowie die Reibungskräfte und Flächenpressungen werden reduziert.

**In** einer bevorzugten Variante umfasst der Grundkörper des Hubelements zwei parallel angeordnete Durchgangsöffnungen zur Aufnahme von zwei Verschlussnadeln entlang der ersten Richtung. Mithin können zwei Verschlussnadeln gleichzeitig in engsten Räumen verbaut und parallel verstellt werden. Dadurch können der benötigte Bauraum und insbesondere die Bauhöhe weiterhin reduziert werden und Multi-Kavitäten geschlossen und/oder geöffnet werden. Je nach Bedarf können dabei insbesondere auch mehrere Hubelemente mit jeweils zwei parallelen Verschlussnadeln benachbart angeordnet werden und sich vorteilhafterweise gegenseitig abstützen. In dieser Ausführungsform können auch verstellbare Verschlussnadeln ohne Nadelköpfe im oberen Endabschnitt eingesetzt werden.

In einer alternativen Ausführungsvariante ist das Befestigungselement von einer Führungsbuchse umschlossen, wobei die Führungsbuchse insbesondere als zylindrisches Hohlprofil ausgebildet ist. Aufgrund der Führungsbuchse wird das System kompakter und es entfällt der Bedarf eines zusätzlichen Fixierelements zur Fixierung des Hubelements mit einer Antriebseinrichtung. Die Fixierung und Führung erfolgt in dieser Ausführungsform unmittelbar über die Führungsbuchse. Dadurch, dass ein Bauteil weniger zum Einsatz kommt, werden zusätzlich Kosten reduziert.

Eine weitere wichtige Variante der Erfindung sieht eine Betätigungseinrichtung mit wenigstens einem Hubelement vor. Die Betätigungsvorrichtung weist dabei eine Antriebseinrichtung auf, wobei die Antriebseinrichtung abtriebsseitig eine Translationsbewegung umsetzt. Die Antriebseinrichtung kann beispielsweise einen Elektromotorantrieb aufweisen, der einen Schrittmotor oder Servo-Aktuator und ein Lineargetriebe umfasst. Alternativ kann anstelle eines Elektroantriebes auch ein kompakter pneumatischer oder hydraulischer Linearstellantrieb eingesetzt werden. Dadurch wird vorteilhafterweise eine relativ geringe Gesamtbauhöhe erzielt und Bauraum eingespart. Jedenfalls ist vorgesehen, dass die Antriebseinrichtung abtriebsseitig aufgrund einer Wegübersetzung eine Translationsbewegung umsetzt.

Vorzugsweise ist die Antriebseinrichtung abtriebsseitig an ein Schieberelement gekoppelt, wobei das Schieberelement insbesondere als Querbalken ausgebildet ist. Um die gewünschte Hubbewegung der Verschlussnadel entlang der ersten Richtung umsetzen zu können, ist das Schieberelement entlang einer zu der ersten Richtung quer verlaufenden zweiten Richtung bewegbar, wobei das Schieberelement von der Antriebseinrichtung angetrieben wird. Dabei ist das Schieberelement mit wenigstens zwei Steuerschienen verbunden, wobei die Steuerschienen entlang der zweiten Richtung bewegbar sind.

Nach einer bevorzugten Ausführungsform sieht die Erfindung weiter vor, dass sich die Steuerschienen entlang der zweiten Richtung längserstrecken, wobei die Steuerschienen stirnseitig über Fixierelemente an dem Schieberelement fixierbar sind, und wobei das Hubelement zwischen den wenigstens zwei entlang der zweiten Richtung bewegbaren Steuerschienen angeordnet ist. Dabei ist das Hubelement vorzugsweise in der zweiten Richtung zwangsgeführt ist. Dadurch bilden das Schieberelement und die Steuerschienen vorteilhafterweise einen U-förmigen Rahmen zur sicheren Aufnahme und Führung der Hubelemente aus. Die Steuerschienen und das Schieberelement sind insbesondere kraft und/oder formschlüssig miteinander verbunden. Alternativ können Schieberelement und Steuerschienen auch einstückig ausgebildet sein. Dadurch kann der Fertigungsaufwand reduziert werden.

Um die Zwangsführung des Hubelements in der zweiten Richtung bei einer gleichzeitigen Hubbewegung der Verschlussnadel in der ersten Richtung einstellen zu können, weisen die Steuerschienen seitliche Führungsflächen auf, wobei die seitlichen Führungsflächen der Steuerschienen mit Ausnehmungen zur Aufnahme der Führungselemente des Hubelements versehen sind. Vorzugsweise sind die Ausnehmungen der Führungsflächen der Steuerschienen Schrägnuten zur Aufnahme und Führung der Führungselemente, wobei die Schrägnuten insbesondere kurvenförmig ausgebildet sind. Die Ausnehmungen sind relativ einfach und kostengünstig zu fertigen, wobei die Ausnehmungen gleichzeitig eine Aufnahme- und Führungsschnittstelle zur Anbringung der Führungselemente bieten. Dabei sind die Führungselemente vorzugsweise mit ihren drehbaren Laufflächen in die Ausnehmungen der seitlichen Führungsflächen der Steuerschienen einsetzbar, wobei die drehbaren Laufflächen der Führungselemente in den Ausnehmungen der seitlichen Führungsflächen der Steuerschienen rollgeführt sind.

Aufgrund der Kurvengeometrie der Schrägnuten in den Steuerschienen, worin die drehbaren Laufflächen der Führungselemente eingesetzt und geführt sind, wird ein besonders sanftes Schließverhalten der Verschlussnadel eingestellt. Dabei ist die kurvenförmige Schrägnut insbesondere derart ausgebildet, dass das Führungselement kurz vor Erreichen eines Schließpunktes der Verschlussnadel bzw. vor einem unteren Endanschlag der Schrägnut, entlang der ersten Richtung verzögert wird. Den unteren Endanschlag kann man aus konstruktiver Sicht quasi als unteren "Totpunkt" der Führungselemente bzw. Schrägnut betrachten. Die Verzögerung wird insbesondere durch einen nahezu ebenen Verlauf der Schrägnut im Bereich des unteren Endanschlags hervorgerufen. Die Führungselemente bzw. die drehbaren Laufflächen werden beim Schließen der Verschlussnadel bzw. beim Schließvorgang von einer geneigten Ebene in eine weniger bis gar nicht geneigte Ebene überführt. Dabei ist der Bereich des unteren Endanschlags der Schrägnut insbesondere zylindrisch und korrespondierend zu den drehbaren Laufflächen der Führungselemente ausgebildet. Diese konstruktive Maßnahme unterstützt ein sanftes Schließverhalten der Verschlussnadel zusätzlich. Die in den Ausnehmungen der Steuerschienen geführten drehbaren Laufflächen sorgen vorteilhafterweise für eine dauerhaft zuverlässige und nahezu Reibungslose Betätigung der Hubelemente bzw. Verschlussnadeln.

Aufgrund des Rotationsfreiheitsgrades der drehbaren Laufflächen, die innerhalb der Ausnehmungen der Steuerschienen anliegen, und aufgrund der vorgegebenen Rollführung, wird die Gleitreibung bei Relativbewegungen zwischen Hubelement und Steuerschienen nahezu vollständig reduziert. Dadurch nimmt die Lebensdauer der Führungselemente deutlich zu. Vorzugsweise resultiert dabei eine Bewegung der Steuerschienen entlang der zweiten Richtung in eine Hubbewegung des Hubelements entlang der ersten Richtung. Die Führungselemente sind als Verschleißteile ausgebildet die einfach ausgewechselt werden können.

In einer alternativen bevorzugten Variante, sind die Ausnehmungen der Steuerschienen Fixieröffnungen, wobei die Führungselemente insbesondere über ihre Vorsprünge in den Fixieröffnungen der Steuerschienen fixierbar sind. Die Fixieröffnungen des Hubelements dienen zur seitlichen Aufnahme und sicheren Festlegung der Führungselemente. In dieser alternativen Variante sind die Führungselemente umgekehrt angeordnet und werden über ihre Vorsprünge in den Ausnehmungen der Steuerschienen fixiert, wohingegen die dem Hubelement zugewandte Seite mit den drehbaren Laufflächen in den Ausnehmungen des Hubelements geführt bzw. rollgeführt sind. Zur Optimierung der Fertigung, können die Führungselemente auch einstückig mit den Steuerschienen ausgebildet sein. Diese Maßnahme führt zu einer Senkung der Fertigungskosten und des Fertigungsaufwandes.

In einer weiteren bevorzugten Variante weist das Schieberelement wenigstens einen Vorsprung auf, wobei der Vorsprung sich in der zweiten Richtung erstreckt und zwischen den wenigstens zwei Steuerschienen angeordnet ist. Der Vorsprung bietet vorteilhafterweise zusätzliches Fixiermaterial für die Anbringung der Steuerschienen und kann aufgrund der Anordnung zwischen zwei Steuerschienen gleichzeitig als Anschlag für das Hubelement dienen. Dabei weisen die Steuerschienen an ihren seitlichen Führungsflächen Befestigungsöffnungen zur Fixierung der Steuerschienen mit dem Vorsprung des Schieberelementes auf, wobei Fixierelemente für die Fixierung vorgesehen sind. Wenn mehrere Vorsprünge zur Aufnahme von mehr als zwei Steuerschienen nebeneinander angeordnet sind, bieten die Vorsprünge kein zusätzliches Fixiermaterial, sondern dienen vielmehr als Vorpositionierungshilfe, weil die Steuerschienen aufgrund der Vorsprünge einfacher angesetzt und festgelegt werden können. Die Handhabung bei der Montage wird dadurch stark vereinfacht. Ferner kann dadurch ein vordefinierter Abstand zwischen den Steuerschienen eingestellt werden. Die Vorsprünge sind dabei vorzugsweise kürzer ausgebildet.

Vorzugsweise ist das Hubelement zwischen zwei Anschlagelementen angeordnet, wobei die Anschlagelemente zwischen den Steuerschienen angeordnet sind. Dadurch wird vorteilhafterweise einem Kippmoment in zweiter Richtung entgegengewirkt. Ohne die Anschlagelemente würde Gefahr drohen, dass die Hubelemente bei der Betätigung aufgrund eines Kippmomentes nicht sicher geführt werden.

Nach einer weiteren Ausführungsform sind relativ zueinander bewegte und somit verschleißgefährdete Bauteile, insbesondere die Steuerschienen und/oder die Hubelemente und/oder die Führungselemente zumindest teilweise aus einem selbstschmierenden oder aus einem diamantartigen Material gefertigt oder zumindest teilweise mit einem selbstschmierenden oder einem diamantartigen Material beschichtet. Dabei ist besonders bevorzugt, dass das selbstschmierende Material ein Lagermetall, insbesondere eine Blei-, Zinn-, Aluminium- oder Kupferlegierung oder ein Sintermetall ist. Bevorzugt kann auch Bronze oder Sinter-Bronze verwendet werden. Dadurch werden Reibungskräfte zwischen relativ zueinander bewegten Bauteilen vermindert. Zudem wirkt sich die Beschichtung günstig auf die Gleit- und Führungseigenschaften der Bauteile aus.

Um in Multikavitäten-Werkzeuge eingesetzt werden zu können und gleichzeitig weiterhin besonders kompakt zu bleiben, sind in einer weiteren bevorzugten Variante wenigstens zwei, insbesondere vier Betätigungsvorrichtungen mit je zwei Steuerschienen parallel nebeneinander angeordnet sind.

Nach einer weiteren wichtigen bevorzugten Ausführungsform ist eine Betätigungsvorrichtung mit wenigstens vier, insbesondere mit fünf Steuerschienen angeordnet, wobei zwischen den jeweiligen Steuerschienen wenigstens zwei, insbesondere vier Hubelemente vorgesehen sind. Bei der Ausführungsform mit vier Hubelementen eignet es sich besonders gut die beschriebenen Anschlagelemente zur Vermeidung von unerwünschten Kippmomenten wegzulassen. Die Hubelemente sind entlang der zweiten Richtung zueinander angrenzend angeordnet, so dass sie sich vorteilhafterweise gegenseitig abstützen und sicher geführt werden können. Dieser vorteilhafte Effekt der gegenseitigen Abstützung lässt sich zudem auch auf alle anderen Ausführungsvarianten der Erfindung übertragen. Dabei sind die einzelnen Steuerschienen vorzugsweise über das Schieberelement miteinander verbunden und teilen eine gemeinsame Antriebseinheit. Dadurch können zusätzlich Kosten- und Fertigungsaufwand reduziert werden. Diese Variante eignet sich insbesondere dann als vorteilhaft, wenn eine gemeinsame bzw. einheitliche Ansteuerung der Verschlussnadeln in einem Multikavitäten-Werkzeug erfolgen soll. Für den Fall, dass die Verschlussnadeln mit unterschiedlichen Schließkräften und/oder Schließzeiten separat angesteuert werden müssen, bietet sich insbesondere die beschriebene Variante mit mehreren einzelnen Antriebseinheiten an.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1a: eine Explosionsansicht eines erfindungsgemäßen Hubelements mit eingesetzter Verschlussnadel und zwei Führungselementen;
- Fig. 1b: eine Schnittdarstellung des Hubelements von Fig. 1a;
- Fig. 1c: eine Schrägansicht des Hubelements von Fig. 1a in montierter Stellung;
- Fig. 1d: eine Schrägansicht des Hubelements von Fig. 1a mit vier Führungselementen in montierter Stellung;
- Fig. 1e: eine Schrägansicht von vier zusammengeführten Hubelementen von Fig. 1c;
- Fig. 1f: eine alternative Ausführung eines erfindungsgemäßen Hubelements mit aufgesetzter Führungsbuchse;
- Fig. 1g: eine Laufrolle mit Gewindebereich im Detail;
- Fig. 2a: eine Schrägansicht einer erfindungsgemäßen Betätigungsvorrichtung in montierter Stellung;
- Fig. 2b: eine Schrägansicht einer Betätigungsvorrichtung nach einer weiteren Ausführungsform in montierter Stellung;
- Fig. 3a: eine Schnittdarstellung der Steuerschienen und Hubelemente von Fig. 2a;
- Fig. 3b: eine transparente Schrägansicht des Hubelements von Fig. 1d geführt in einer Steuerschiene;
- Fig. 4a: eine Schrägansicht einer Betätigungsvorrichtung nach einer weiteren Ausführungsform in montierter Stellung;
- Fig. 4b: eine Teilexplosionsansicht der Betätigungsvorrichtung von Fig. 4a;
- Fig. 4c: eine Schrägansicht von vier parallel angeordneten Betätigungsvorrichtungen von Fig. 4a;
- Fig. 5: eine Schräg- und Schnittansicht einer Betätigungsvorrichtung und eines Hubelements nach einer weiteren Ausführungsform in montierter Stellung, und
- Fig. 6: eine Seitenansicht einer erfindungsgemäßen Steuerschiene in geöffneter (unten) und geschlossener (oben) Verschlussnadelstellung mit kurvenförmigen Schrägnuten.

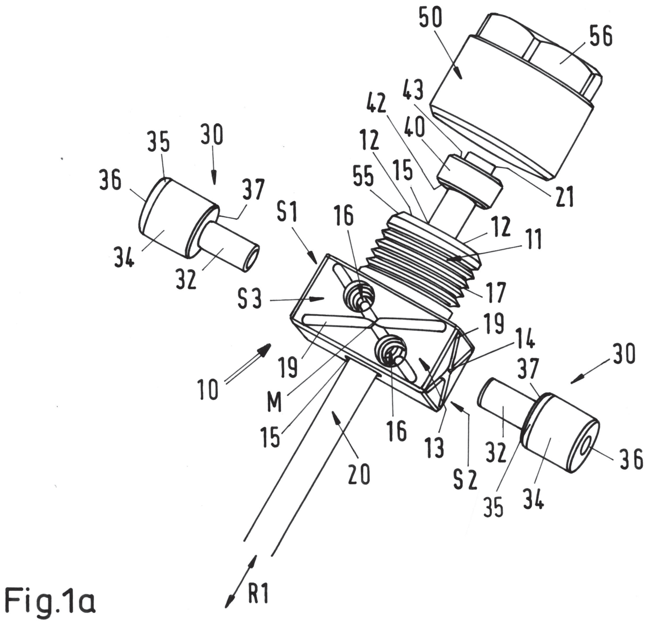

Das in Fig. 1a allgemein mit 10 bezeichnete Hubelement zur Betätigung einer Verschlussnadel 20 in einem Spritzgießwerkzeug mit Nadelverschlussdüsen (nicht dargestellt) hat einen quaderförmigen Grundkörper 13, in den die Verschlussnadel 20 in einer ersten Richtung R1 eingesetzt ist. Die Verschlussnadel 20 umfasst einen oberen und einen unteren Endabschnitt 21, 22 und führt bei einer Betätigung des Hubelements 10 eine Hubbewegung in der ersten Richtung R1 aus. Der obere Endabschnitt 21 ist flach ausgebildet, wohingegen der untere Endabschnitt 22 (ebenfalls nicht dargestellt) eine Nadelspitze zum Verschließen einer Formkavität (gleichfalls nicht gezeigt) in einem Spritzgießwerkzeug aufweist. Der quaderförmige Grundkörper 13 weist ferner zwei erste gegenüberliegende Seitenflächen S1, S2 mit ersten Ausnehmungen 14 auf. Senkrecht zu den ersten gegenüberliegenden Seitenflächen S1, S2 des Grundkörpers 13 sind zwei weitere gegenüberliegende Seitenflächen S3, S4 angeordnet, die jeweils zwei weitere Ausnehmungen 16 aufweisen.

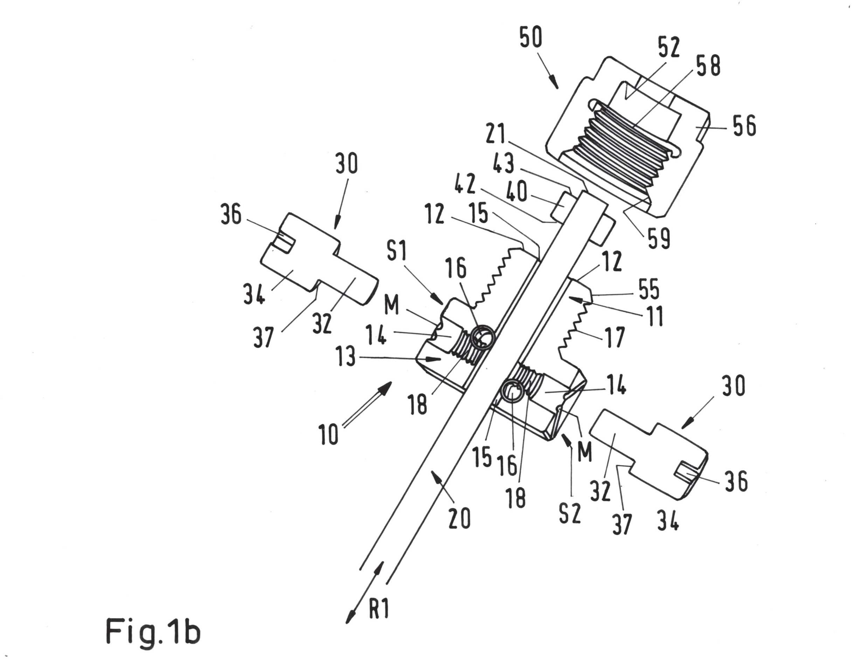

Durch Hinzunahme von Fig. 1b wird in einer Zusammenschau ersichtlich, dass die ersten und die weiteren Ausnehmungen 14, 16 als Fixieröffnungen, insbesondere als Schraublöcher, zur Aufnahme und Fixierung von Führungselementen 30 ausgebildet sind. Die ersten Seitenflächen S1, S2 und die weiteren Seitenflächen S3, S4 weisen jeweils Mittelpunkte M auf, wobei die ersten Ausnehmungen 14 der ersten Seitenflächen S1, S2 konzentrisch zum Mittelpunkt M und die weiteren Ausnehmungen 16 der weiteren Seitenflächen S3, S4 exzentrisch zum Mittelpunkt M ausgebildet sind. Wie man erkennt, ist der Abstand zwischen den Mittelpunkten M der weiteren Seitenflächen S3, S4 und den zwei weiteren Ausnehmungen 16 auf jeder der weiteren Seitenflächen S3, S4 im Wesentlichen gleich groß. Dabei sind die ersten Ausnehmungen 14 und die weiteren Ausnehmungen 16 jeweils mit Innengewinde 18 zur Festlegung der Führungselemente 30 im Grundkörper 13 versehen. An den ersten Seitenflächen S1, S2 und an den weiteren Seitenflächen S3, S4 sind abgesetzte und X-förmige Nuten 19 ausgebildet, die sich diagonal nahezu über die gesamten Seitenflächen des Grundkörpers 13 erstrecken. Zudem weist der Grundkörper 13 einen zylindrischen Stutzen 11 auf, der im Wesentlichen senkrecht zu dem Grundkörper 13 angeordnet und mit einem Gewinde 17 versehen ist. Der Grundkörper 13 des Hubelements 10 und der Stutzen 11 umfassen dabei eine Durchgangsöffnung 15 zur Aufnahme der Verschlussnadel 20 entlang einer ersten Richtung R1.

Die Führungselemente 30 sind im Wesentlichen zylindrisch ausgebildet und weisen dem Grundkörper 13 zugewandte Vorsprünge 32 auf, worüber die Führungselemente 30 in den ersten Ausnehmungen 14 der ersten Seitenflächen S1, S2 des Grundkörpers 13 fixiert werden können. Die Vorsprünge 32 sind für die Fixierung mit Gewinde versehen (nicht dargestellt), die zu den Innengewinde 18 der ersten Ausnehmungen 14 korrespondieren. Ferner weisen die Führungselemente 30 Aufnahmebereiche 35 für die Aufnahme von drehbar gelagerten Laufflächen 34 auf. Die Laufflächen 34 sind insbesondere als Laufrollen ausgebildet, wobei die Aufnahmebereiche 35 der Führungselemente 30 einen größeren Durchmesser, als die Vorsprünge 32 der Führungselemente 30 aufweisen. Aufgrund der Durchmesserdifferenz entsteht an den Führungselementen 30 ein Anschlag 37 der in montierter Stellung der Führungselemente 30 am Grundkörper 13 anliegt. Die Führungselemente 30 können insbesondere eine Edelstahllegierung aufweisen und sind insbesondere als Verschleißteile ausgelegt, so dass sie bei Bedarf einfach über das Lösen von Fixierelementen 36 ausgewechselt werden können.

Im Bereich des oberen Endabschnitts 21 der Verschlussnadel 20 ist ein ringförmiger Nadelkopf 40 positioniert, so dass der Nadelkopf 40 in der ersten Richtung R1 eine erste und zweite Anschlagsfläche 42, 43 bildet. Die erste Anschlagsfläche 42 ist dem unteren Endabschnitt 22 der Verschlussnadel 20 zugewandt, wobei die zweite Anschlagsfläche 43 dem oberen Endabschnitt 21 der Verschlussnadel 20 zugewandt ist. Dabei hat der Stutzen 11 einen zu der ersten Anschlagsfläche 42 des Nadelkopfs 40 korrespondierenden Anschlag 12, der im eingesetzten Zustand der Verschlussnadel 20 an der ersten Anschlagsfläche 42 des Nadelkopfs 40 anliegt.

Zur Fixierung der Verschlussnadel 20 mit dem Hubelement 10, ist ein hohlzylindrisches Befestigungselement 50 mit Innengewinde 58 vorgesehen, das auf den Stutzen 11 aufgeschraubt werden kann. In diesem Zusammenhang weist der Stutzen 11 an seiner Oberseite, die dem Befestigungselement 50 zugewandt ist, eine Einführschräge 55 auf. Das Befestigungselement 50 umfasst dabei eine zu der Einführschräge 55 des Stutzens 11 korrespondierende Anlaufschräge 59. Dabei hat das Befestigungselement 50 einen zu der weiten Anschlagsfläche 43 des Nadelkopfs 40 korrespondierenden Anschlag 52, der im fixierten Zustand an der zweiten Anschlagsfläche 43 des Nadelkopfs 40 anliegt. Wie man weiter erkennt, ist das Befestigungselement 50 an seiner Oberseite mit einer Kantengeometrie 56 versehen. Dabei handelt es sich insbesondere um eine Sechskantgeometrie.

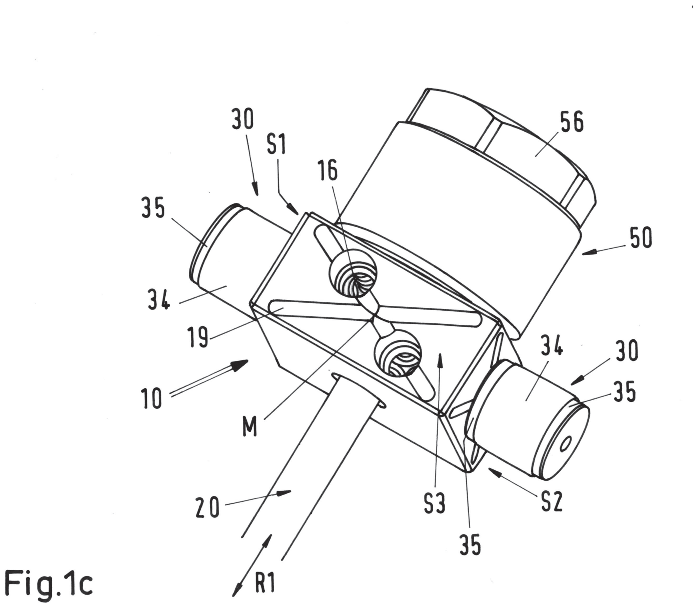

Fig. 1c beleuchtet die weitere Seitenfläche S3 des Hubelements 10 in montierter Position mit eingesteckter Verschlussnadel 20 und fixiertem Befestigungselement 50. In den ersten Ausnehmungen der ersten gegenüberliegenden Seitenflächen S1, S2 des Hubelements 10, sind jeweils ein Führungselement 30 fixiert.

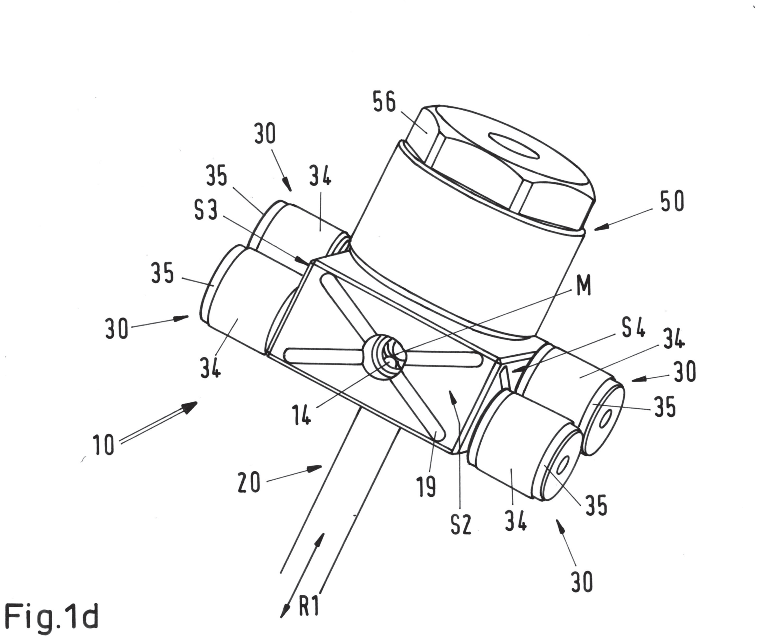

Fig. 1d beleuchtet die erste Seitenfläche S2 des Hubelements 10 in montierter Position mit eingesteckter Verschlussnadel 20 und fixiertem Befestigungselement 50. In den weiteren Ausnehmungen der weiteren gegenüberliegenden Seitenflächen S3, S4 des Hubelements 10, sind jeweils zwei Führungselemente 30 in den weiteren Ausnehmungen fixiert.

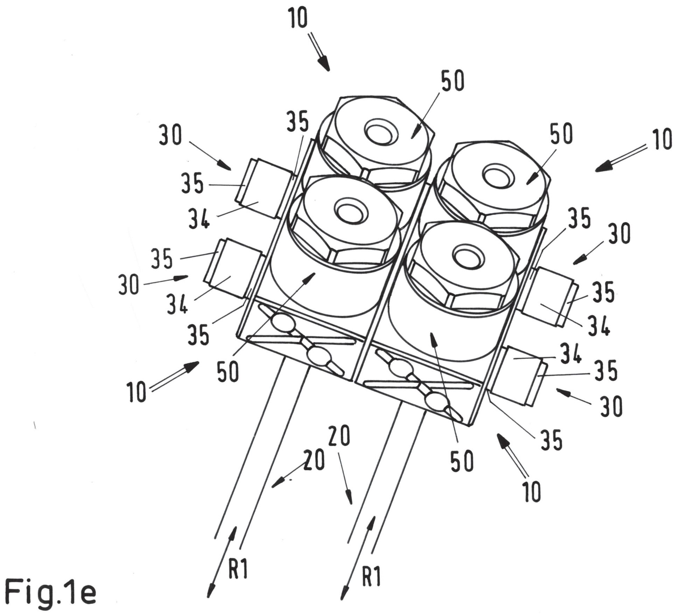

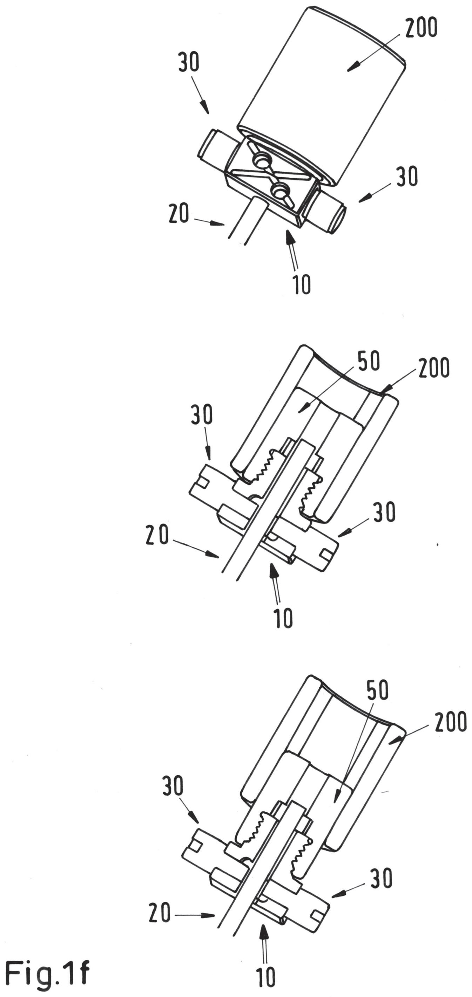

In Fig. 1e sind vier zusammengeführte Hubelemente 10 von Fig. 1c dargestellt, die sich gegenseitig über ihre Seitenflächen zu einer größeren Quaderform abstützen und Kontaktflächen bilden. An den "äußeren" ersten Seitenflächen S1, S2, die nicht in Kontakt zu anderen Seitenflächen stehen, weisen die vier Hubelemente 10 in zusammengeführter und montierter Stellung jeweils ein Führungselement 30 auf. An den "äußeren" weiteren Seitenflächen S3, S4, die nicht in Kontakt zu anderen Seitenflächen stehen, sind keine Führungselemente 30 eingesetzt. Die weiteren Ausnehmungen 16 der weiteren Seitenflächen S3, S4 sind frei und können als Schmierstoffdepot genutzt werden. Fig. 1f zeigt eine alternative Ausführungsvariante, wonach das Befestigungselement 50 von einer Führungsbuchse 200 umschlossen ist. Die Führungsbuchse 200 ist als zylindrisches Hohlprofil ausgebildet, wobei ein Innendurchmesser der Führungsbuchse einem Außendurchmesser des Befestigungselements 50 entspricht. Wie man erkennt, erstreckt sich die Führungsbuchse 200 weiter in Axialrichtung als das Befestigungselement 50.

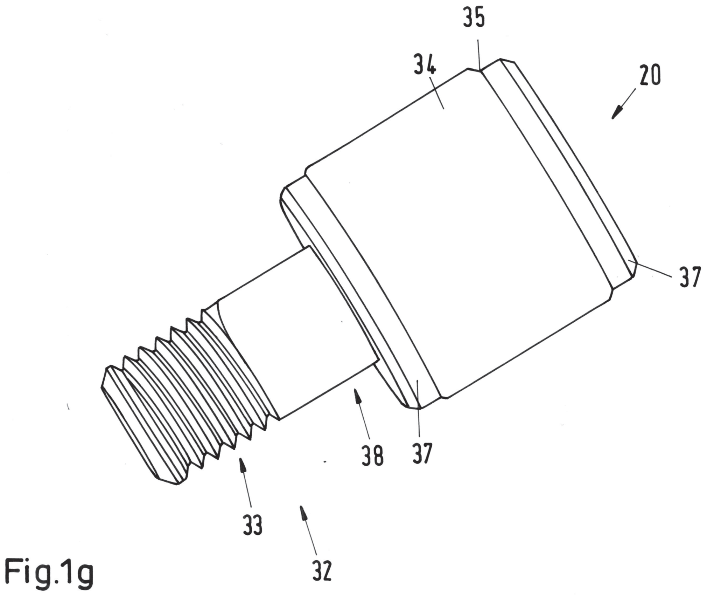

In Fig. 1g wird eine Laufrolle 30 im Detail gezeigt. Die Laufrolle 30 weist eine Lauffläche 34 auf, die rotierend bzw. drehbar zwischen zwei Anschlägen 37 in einem Aufnahmebereich 35 gelagert ist. Ferner weist die Laufrolle 30 einen zylindrischen Vorsprung 32 zum Einsatz in passende korrespondierende Seitenteile auf. Dazu ist die Laufrolle 30 mit einem Passdurchmesser 38 und einem Gewindebereich 33 versehen.

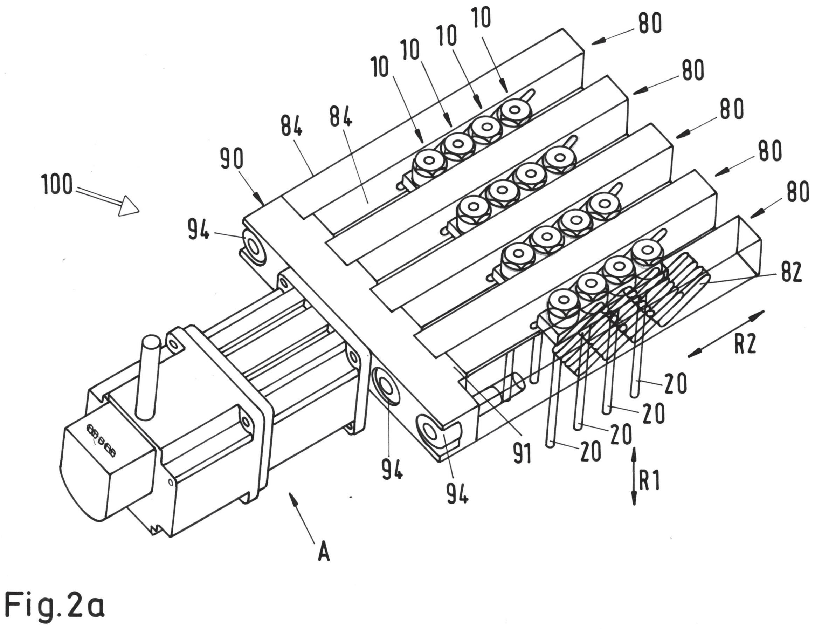

Die in Fig. 2a allgemein mit 100 bezeichnete Betätigungsvorrichtung weist eine Antriebseinrichtung A auf, die abtriebsseitig mit einem Schieberelement 90 verbunden ist um eine Translationsbewegung in einer zweiten Richtung R2 umzusetzen. Das Schieberelement 90 wird von der Antriebseinrichtung A angetrieben und ist als Querbalken mit Vorsprüngen 91 ausgeführt. Das Schieberelement 90 ist stirnseitig über Fixierelemente 94 mit fünf Steuerschienen 80 verbunden, die in der zweiten Richtung R2 über das Schieberelement 90 bewegbar sind und jeweils zwischen den Vorsprüngen 91 des Schieberelements 90 angeordnet sind. Die Steuerschienen 80 erstrecken sich entlang der zweiten Richtung R2 und weisen seitliche Führungsflächen 84 für die Hubelemente 10 auf, wobei die seitlichen Führungsflächen 84 der Steuerschienen 80 mit Ausnehmungen 82 zur Aufnahme der Führungselemente 30 der Hubelemente 10 versehen sind. Die Ausnehmungen 82 sind als Schrägnuten zur Aufnahme der drehbaren Laufflächen 34 der Führungselemente 30 ausgeführt. Zwischen zwei Steuerschienen 80 sind jeweils vier Führungselemente 30 angeordnet, die sich in der zweiten Richtung R2 gegenseitig abstützen und seitlich durch die Steuerschienen 80 begrenzt werden. Durch den Antrieb des Schieberelements 90 und der ausgeführten Translationsbewegung bzw. Wegübersetzung, sind die Hubelemente 10 in der zweiten Richtung R2 zwangsgeführt.

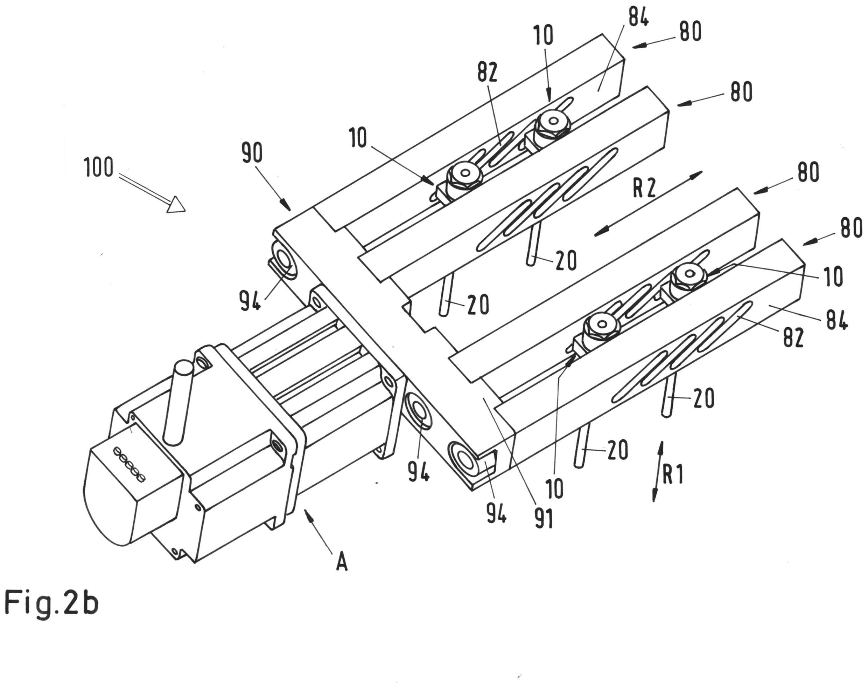

Fig. 2b zeigt eine weitere Ausführungsform einer Betätigungsvorrichtung 100 mit vier Steuerschienen 80, die stirnseitig über die Fixierelemente 94 an dem Schieberelement 90 fixiert sind. Die mittlere Steuerschiene von Fig. 2a ist ausgenommen, sodass die gesamte Betätigungsvorrichtung 100 einen U-Förmigen Rahmen ausbildet. Durch die mittlere "Lücke" kann die Betätigungsvorrichtung 100 flexibler eingesetzt werden. Zwischen den fixierten Steuerschienen 80 sind jeweils zwei beabstandete Hubelemente 10 angeordnet. Die Hubelemente 10 sind über die Führungselemente 30 in den Ausnehmungen 82 eingesetzt und rollgeführt.

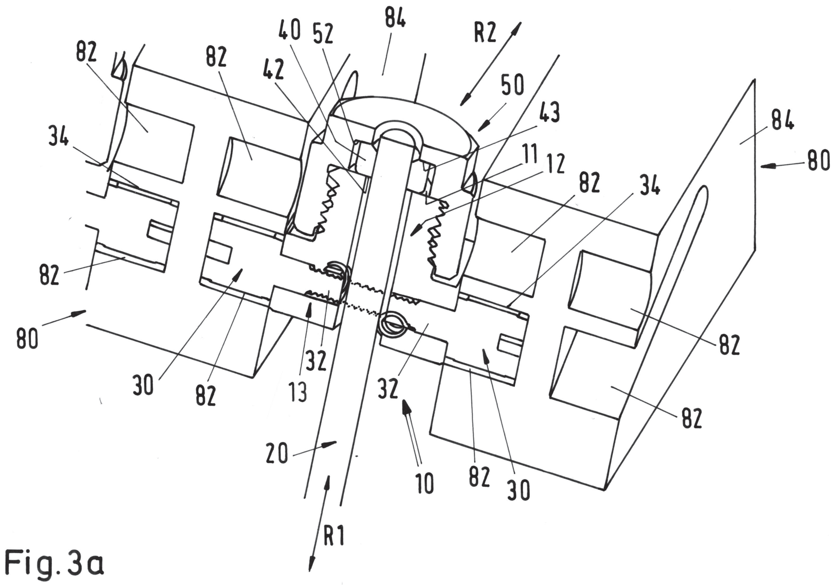

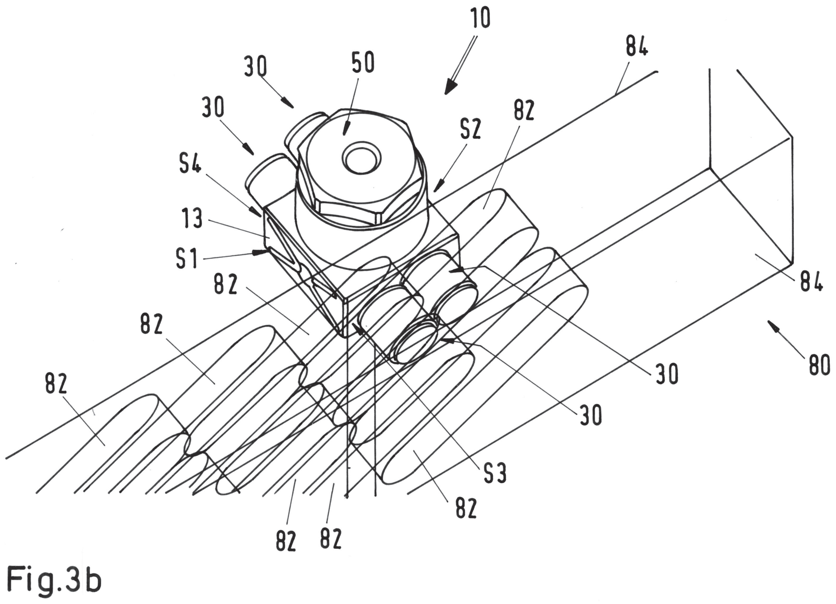

Wie man in der Schnittdarstellung von Fig. 3a sehr gut erkennt, sind die Ausnehmungen 82 der Steuerschienen 80 Schrägnuten, die zur Aufnahme der drehbaren Laufflächen 34 der Führungselemente 30 dienen. Dabei sind in den Steuerschienen 80 jeweils zwei übereinander angeordnete Ausnehmungen 82 ausgebildet, damit bei Bedarf zwei Führungselemente 30 eingesetzt werden können. In diesem Zusammenhang zeigt Fig. 3b exemplarisch ein Hubelement 10, das mit zwei Führungselementen 30 in der Ausnehmung 82 bzw. Schrägnut der Steuerschiene 80 geführt wird.

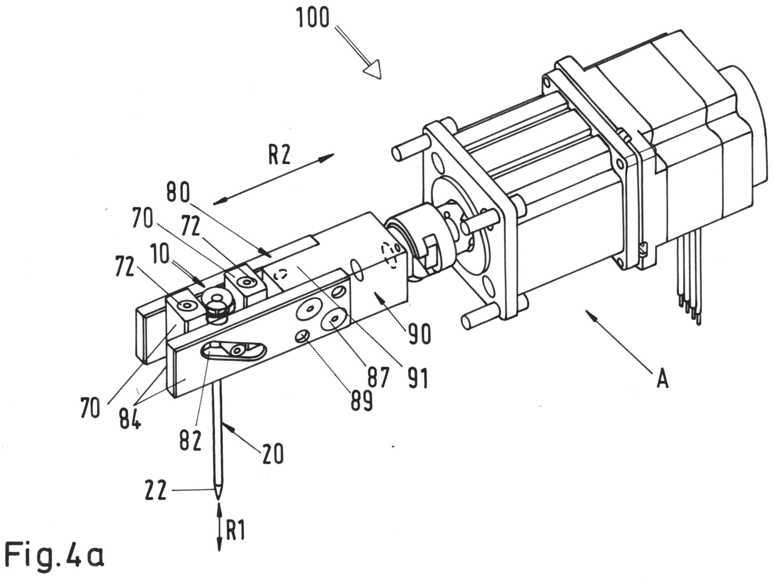

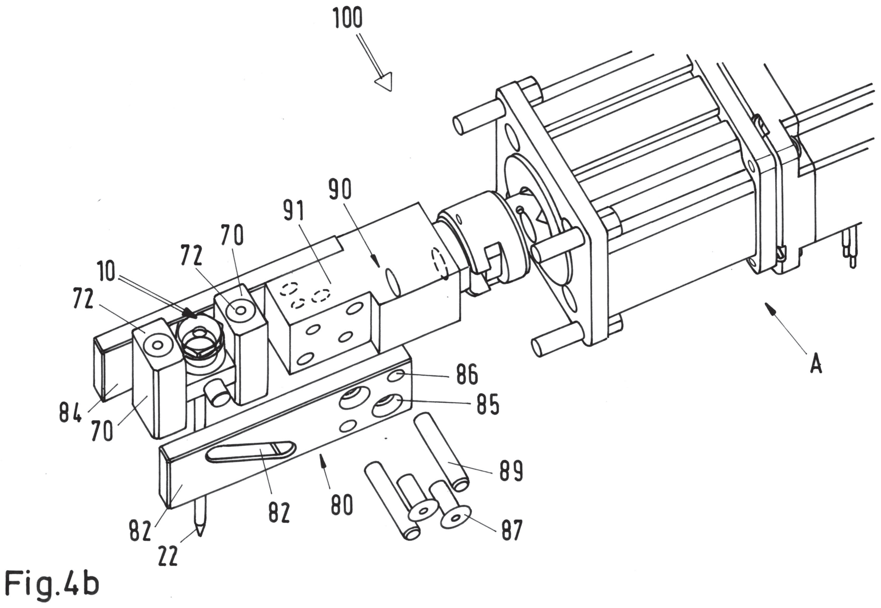

Fig. 4a und Fig. 4b beleuchten eine Betätigungsvorrichtung 100 mit zwei Steuerschienen 80 zur Aufnahme eines einzelnen Hubelements 10 mit einer einzelnen Verschlussnadel 20. Die Steuerschienen 80 weisen dabei an ihren seitlichen Führungsflächen 84 Befestigungsöffnungen 85,86 zur Fixierung der Steuerschienen 80 mit dem Vorsprung 91 des Schieberelementes 90 auf, wobei Fixierelemente 87, 89 für die Fixierung vorgesehen sind. Das Hubelement 10 ist zwischen zwei Anschlagelementen 70 angeordnet, wobei die Anschlagelemente 70 zwischen den Steuerschienen 80 angeordnet sind und die Hubelemente 10 in der zweiten Richtung R2 begrenzen und führen. Dabei sind die Anschlagelemente 70 über Fixierelemente 72 mit der Antriebseinrichtung A befestigt, so dass die Anschlagelemente 70 bei einer abtriebsseitigen Translationsbewegung des Schieberelements 90, die Hubelemente 10 in der zweiten Richtung R2 verschieben. Eine Bewegung des Schieberelements 90 bzw. der Steuerschienen 80 und der Anschlagelemente 70 in der zweiten Richtung R2, resultiert in eine Hubbewegung des Hubelements 10 bzw. der Verschlussnadel 20 in der ersten Richtung R1.

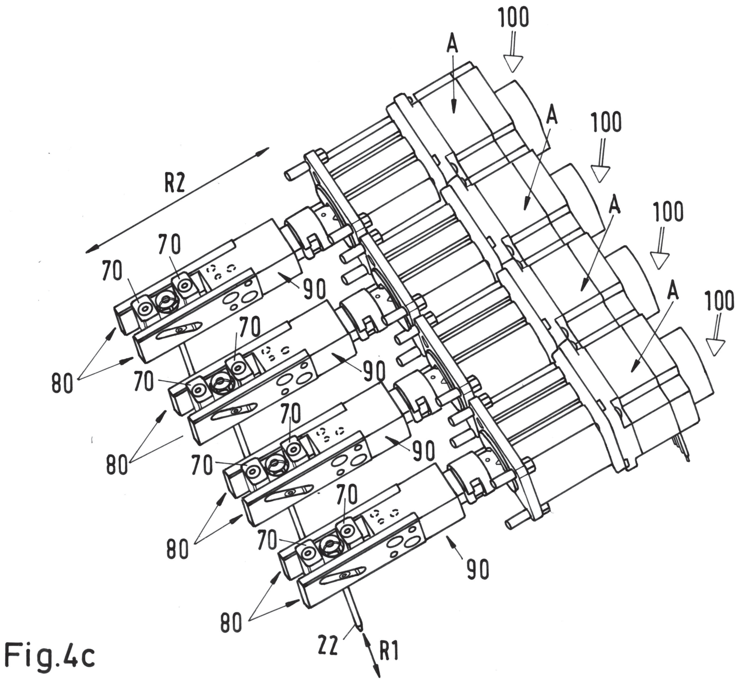

In Fig. 4c sind vier parallel angeordnete Betätigungsvorrichtungen von Fig. 4a und Fig. 4b mit jeweils zwei Steuerschienen 80 und je einem Hubelement 10 angeordnet.

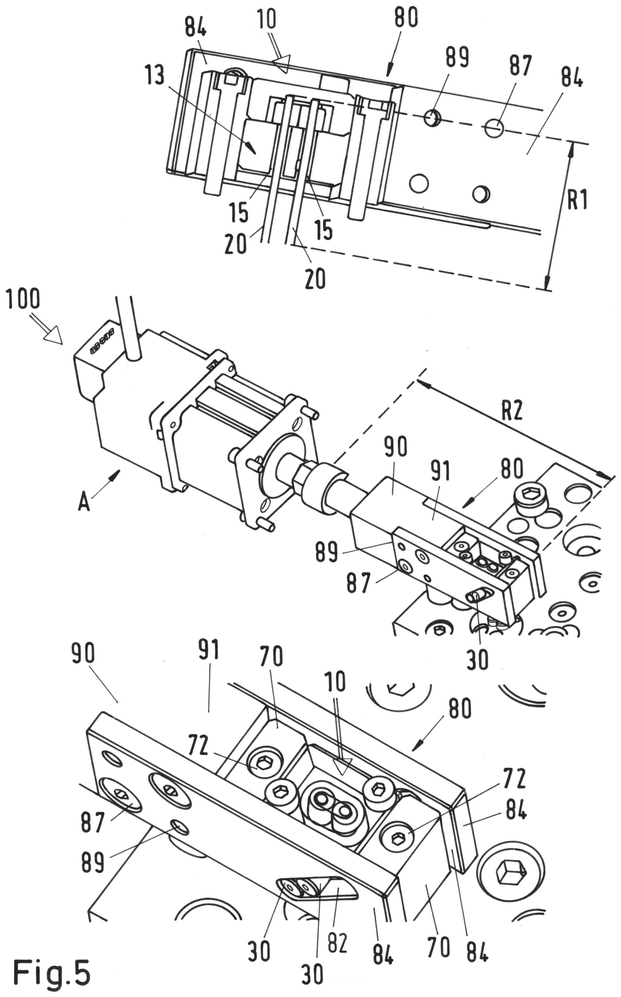

Fig. 5 zeigt eine Betätigungsvorrichtung 100 mit einem Hubelement 10 und mit zwei parallel angeordneten Durchgangsöffnungen 15, worin zwei Verschlussnadeln 20 parallel entlang der ersten Richtung R1 eingesetzt sind. Die genaue Anordnung und Funktionsweise der Steuerschienen 80, des Schieberelements 90, der Anschlagelemente 70 und der Antriebseinrichtung A, bleiben im Vergleich zu den vorherigen beschriebenen Ausführungsformen im Wesentlichen unverändert.

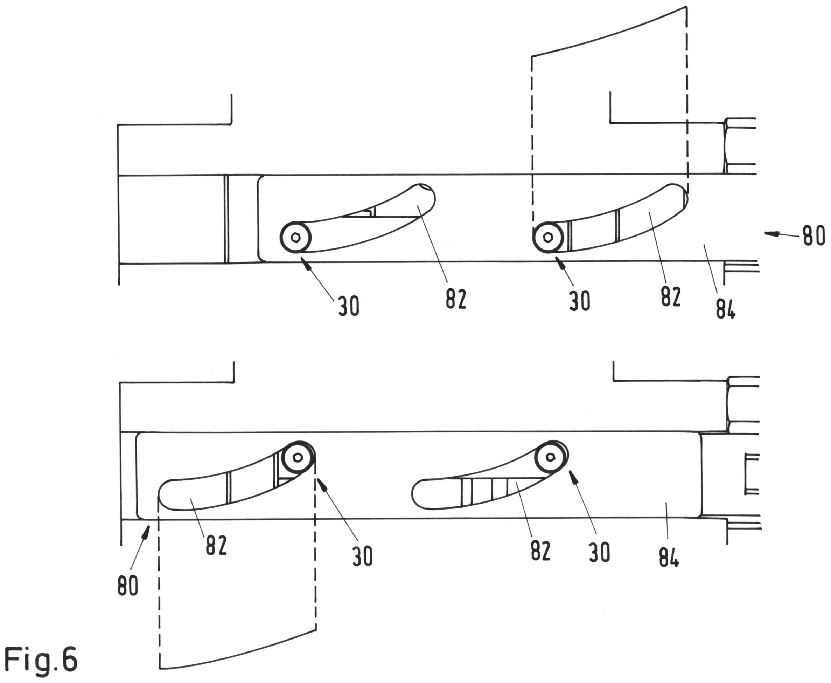

Aus der Seitenansicht von Fig. 6 gehen insbesondere die bevorzugten technischen Details der Steuerschienen 80 und der Ausnehmungen 82 in den Führungsflächen 84 der Steuerschienen 80 hervor. Die Ausnehmungen 82 in den Führungsflächen 84 der Steuerschienen 80 sind als kurvenförmige Schrägnuten zur Aufnahme und Führung der Führungselemente 30 ausgebildet. Die Führungselemente 30 sind insbesondere mit ihren drehbaren Laufflächen 34 in den kurvenförmigen Ausnehmungen 82 der seitlichen Führungsflächen 84 der Steuerschienen 80 eingesetzt und rollgeführt. Dabei ist die kurvenförmige Ausnehmung 82 insbesondere derart ausgebildet, dass das Führungselement 30 kurz vor Erreichen eines Schließpunktes der Verschlussnadel 20 bzw. vor einem unteren Endanschlag der Ausnehmung 82, entlang der ersten Richtung R1 verzögert wird. Der Bereich des unteren Endanschlags der kurvenförmigen Ausnehmung 82 ist zylindrisch und korrespondierend zu den drehbaren Laufflächen der Führungselemente 30 ausgebildet. In der oberen Darstellung befindet sich die Verschlussnadel 20 in einer geschlossenen Position. In der unteren Darstellung befindet sich die Verschlussnadel hingegen in einer geöffneten Position.

Die Erfindung ist nicht auf eine der vorbeschriebenen Ausführungsformen beschränkt, sondern in vielfältiger Weise abwandelbar. Die Führungselemente können beispielsweise andere bevorzugt zylindrische Führungskörper aufweisen oder gänzlich als Stift bzw. Keramikstift mit guten Gleiteigenschaften ausgebildet sein und müssen nicht zwangsläufig als Laufrollen ausgeführt sein. Diverse in der Beschreibung genannte Werkstoffbeschichtungen können zur Reduzierung der Reibung eingesetzt werden. Die Führungselemente können als Verschleißteile ausgelegt oder aber einstückig mit den Steuerschienen bzw. dem Spritzgießwerkzeug ausgebildet sein.

Das erfindungsgemäße Hubelement kann allgemein in jeder geeigneten Vorrichtung zur Ausführung einer gewünschten Hubbewegung eingesetzt werden. Insbesondere ist das Hubelement zur Betätigung einer Verschlussnadel in einem Spritzgießwerkzeug mit Nadelverschlussdüsen vorgesehen.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

| | | | |
|---|---|---|---|
| A | Antriebseinheit | 37 | Anschlag |
| R1 | Erste Richtung | 38 | Passdurchmesser |
| R2 | Zweite Richtung | 40 | Nadelkopf |
| S1, S2 | Erste Seitenflächen | 42 | Erste Anschlagsfläche |
| S3, S4 | Weitere Seitenflächen | 43 | Zweite Anschlagsfläche |
| M | Mittelpunkt | 50 | Befestigungselement |
| | | 52 | Anschlag |
| 10 | Hubelement | 55 | Einführschräge |
| 11 | Stutzen | 56 | Kantengeometrie |
| 12 | Anschlag | 58 | Innengewinde |
| 13 | Grundkörper | 59 | Anlaufschräge |
| 14 | Erste Ausnehmungen | 70 | Anschlagelement |
| 15 | Durchgangsöffnung | 72 | Fixierelement |
| 16 | Weitere Ausnehmungen | 80 | Steuerschiene |
| 17 | Gewinde | 82 | Ausnehmungen |
| 18 | Innengewinde | 84 | Führungsfläche |
| 19 | Nut | 85 | Befestigungsöffnung |
| 20 | Verschlussnadel | 86 | Befestigungsöffnung |
| 21 | Oberer Endabschnitt | 87 | Fixierelement |
| 22 | Unterer Endabschnitt | 89 | Fixierelement |
| 30 | Führungselement | 90 | Schieberelement |
| 32 | Vorsprung | 91 | Vorsprung |
| 33 | Gewindebereich | 94 | Fixierelement |
| 34 | Lauffläche | 100 | Betätigungsvorrichtung |
| 35 | Aufnahmebereich | 200 | Führungsbuchse |
| 36 | Fixierelement | | |

## Patentansprüche

1. Hubelement (10) zur Betätigung einer Verschlussnadel in einem Spritzgießwerkzeug mit Nadelverschlussdüsen, wobei das Hubelement (10) einen Grundkörper (13) umfasst, wobei eine Verschlussnadel (20) in den Grundkörper (13) des Hubelements (10) einsetzbar ist, wobei der Grundkörper (13) wenigstens zwei erste gegenüberliegende Seitenflächen (S1, S2) aufweist, **dadurch gekennzeichnet, dass** an den ersten gegenüberliegenden Seitenflächen (S1, S2) des Grundkörpers (13) jeweils eine erste Ausnehmung (14) ausgebildet ist.

2. Hubelement nach Anspruch 1, **dadurch gekennzeichnet, dass** die ersten Ausnehmungen (14) der ersten Seitenflächen (S1, S2) jeweils ein Innengewinde (18) aufweisen, wobei die ersten Ausnehmungen (14) der ersten Seitenflächen (S1, S2) Fixieröffnungen sind.

3. Hubelement nach Anspruch 1 oder 2, **dadurch gekennzeichnet, dass** zwei Führungselemente (30) vorgesehen sind, wobei die Führungselemente (30) zur Führung des Hubelements (10) in den ersten Ausnehmungen (14) der ersten Seitenflächen (S1, S2) des Grundkörpers (13) fixierbar sind.

4. Hubelement nach Anspruch 4, **dadurch gekennzeichnet, dass** die Führungselemente (30) Aufnahmebereiche (35) aufweisen, wobei die Aufnahmebereiche (35) der Führungselemente (30) einen größeren Durchmesser als die Vorsprünge (32) der Führungselemente (30) aufweisen.

5. Hubelement nach Anspruch 4, **dadurch gekennzeichnet, dass** in den Aufnahmebereichen (35) der Führungselemente (30) drehbare Laufflächen (34) angeordnet sind.

6. Hubelement nach einem der vorhergehenden Ansprüche, **dadurch gekennzeichnet, dass** die ersten Ausnehmungen (14) der ersten Seitenflächen (S1, S2) Führungsnuten sind.

7. Hubelement nach einem der vorhergehenden Ansprüche, **dadurch gekennzeichnet, dass** der Grundkörper (13) einen Stutzen (11) aufweist, wobei der Grundkörper (13) und der Stutzen (11) eine Durchgangsöffnung (15) zur Aufnahme der Verschlussnadel (20) entlang einer ersten Richtung (R1) umfassen.

8. Hubelement nach einem der vorhergehenden Ansprüche, **dadurch gekennzeichnet, dass** der Grundkörper (13) des Hubelements (10) zwei weitere gegenüberliegende Seitenflächen (S3, S4) aufweist, wobei die weiteren gegenüberliegenden Seitenflächen (S3, S4) im Wesentlichen senkrecht zu den ersten gegenüberliegenden Seitenflächen (S1, S2) angeordnet sind.

9. Hubelement nach Anspruch 8, **dadurch gekennzeichnet, dass** an den weiteren gegenüberliegenden Seitenflächen (S3, S4) des Grundkörpers (13) jeweils zwei weitere Ausnehmungen (16) zur gleichzeitigen Aufnahme von je zwei Führungselementen (30) ausgebildet sind.

10. Hubelement nach Anspruch 9, **dadurch gekennzeichnet, dass** die weiteren Ausnehmungen (16) der weiteren Seitenflächen (S3, S4) jeweils ein Innengewinde (18) aufweisen, wobei die weiteren Ausnehmungen (16) der weiteren Seitenflächen (S3, S4) insbesondere Fixieröffnungen sind.

11. Hubelement nach einem der Ansprüche 9 oder 10, **dadurch gekennzeichnet, dass** die weiteren Ausnehmungen (16) der weiteren Seitenflächen (S3, S4) Führungsnuten sind.

12. Betätigungsvorrichtung (100) mit wenigstens einem Hubelement (10) nach einem der Ansprüche 1 bis 11.

13. Betätigungsvorrichtung nach Anspruch 12, **dadurch gekennzeichnet, dass** die Betätigungsvorrichtung (100) eine Antriebseinrichtung (A) aufweist, wobei die Antriebseinrichtung (A) abtriebsseitig eine Translationsbewegung umsetzt, und wobei die Antriebseinrichtung (A) abtriebsseitig an ein Schieberelement (90) gekoppelt ist, wobei das Schieberelement (90) entlang einer zu der ersten Richtung (R1) quer verlaufenden zweiten Richtung (R2) bewegbar ist.

14. Betätigungsvorrichtung nach Anspruch 13, **dadurch gekennzeichnet, dass** das Schieberelement (90) mit wenigstens zwei Steuerschienen (80) verbunden ist.

15. Betätigungsvorrichtung nach Anspruch 14, **dadurch gekennzeichnet, dass** die Steuerschienen (80) seitliche Führungsflächen (84) aufweisen, wobei die seitlichen Führungsflächen (84) der Steuerschienen (80) mit Ausnehmungen (82) zur Aufnahme der Führungselemente (30) des Hubelements (10) versehen sind.
